# EUROPEAN PATENT APPLICATION

(11) **EP 3 299 998 A1**
(43) Date of publication of application: **28.03.2018**
(21) Application number: 17191082.1
(22) Date of filing: 14.09.2017
(51) Int. Cl.: G06K 9/00, G08G 1/16, B60W 50/14

(54) **DRIVER ASSISTANCE APPARATUS**

(30) Priority: 22.09.2016 KR 20160121743
(71) Applicant: LG ELECTRONICS INC., Yeongdeungpo-Gu Seoul 07336 (KR)
(72) Inventor: PARK, Jongmin, 07336 Seoul (KR); GOH, Minsoo, 07336 Seoul (KR)
(74) Representative: Frenkel, Matthias Alexander

(57) **Abstract**

Disclosed is a driver assistance apparatus including a camera configured to acquire a vehicle around image, an output unit, and a processor configured to detect a current driving lane based on the vehicle around image and determine a type of a line that separates the current driving lane, acquire information on an object located in a lane next to the current driving lane, and, based on the type of the line and the information on the object, determine whether to output a warning via the output unit.

## Description

### CROSS-REFERENCE TO RELATED APPLICATION

This application claims the priority benefit of Korean Patent Application No. 10-2016-0121743, filed on September 22, 2016 in the Korean Intellectual Property Office, the disclosure of which is incorporated herein by reference.

### BACKGROUND OF THE INVENTION

### 1. Field of the invention

The present invention relates to a driver assistance apparatus.

### 2. Description of the Related Art

A vehicle is an apparatus that moves in a direction desired by a user riding therein. A representative example of a vehicle may be an automobile.

Meanwhile, a variety of sensors and electronic devices have been mounted in vehicles for the convenience of a user who uses the vehicle. In particular, for user driving convenience, an Advanced Driver Assistance System (ADAS) has been actively studied. In addition, enormous efforts have been being made to develop autonomous vehicles.

As one of driving assistance systems, a Blind Spot Detection (BSD) system is used to detect an object in an area not visible to a driver behind the wheel, and to notify the driver of the presence of the object.

Conventional BSD systems is able to detect an object located in an area not visible to a driver, but cannot respond to driving situation information.

For example, even when the vehicle is travelling in a lane next a sidewalk, an object on the side walk is detected and unnecessary warning is output.

### SUMMARY OF THE INVENTION

The present invention has been made in view of the above problems, and it is one object of the present invention to provide a driver assistance apparatus which detects the current driving, lane on which a vehicle is travelling, and determines whether to output a warning based on information on an object which is located in a lane next to the current driving lane.

Objects of the present invention should not be limited to the aforementioned objects and other unmentioned objects will be clearly understood by those skilled in the art from the following description.

In accordance with an embodiment of the present invention, the above and other objects can be accomplished by the provision of a driver assistance apparatus including a camera configured to acquire a vehicle around image, an output unit, and a processor configured to detect a current driving lane based on the vehicle around image and determine a type of a line that separates the current driving lane, acquire information on an object located in a lane next to the current driving lane, and, based on the type of the line and the information on the object, determine whether to output a warning via the output unit.

The details of other embodiments are included in the following description and the accompanying drawings.

The embodiments of the present invention have one or more effects as follows.

First, a current driving lane is detected, and whether to output a warning is determined based on information of the current driving lane, preventing unnecessary warning and therefore minimizing inconvenience that a driver may feel.

Second, whether to output a warning is determined based on navigation information, and, if a turn signal matching a travelling route is received, a warning is controlled not to be output unnecessarily, minimizing inconvenience that a driver may feel.

Third, blind spot areas are changed in an appropriate manner suitable for a driving situation, and therefore, a warning suitable for the driving situation may be output.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which like reference numerals refer to like elements wherein:
FIG. 1 is a view illustrating the external appearance of a vehicle according to an embodiment of the present invention;
FIG. 2 are different angled views of the external appearance of a vehicle according to an embodiment of the present invention;
FIGS. 3 and 4 are views illustrating the interior configuration of a vehicle according to an embodiment of the present invention;
FIGS. 5 and 6 are views illustrating an object according to an embodiment of the present invention;
FIG. 7 is a block diagram illustrating a vehicle according to an embodiment of the present invention;
FIG. 8 is a block diagram illustrating a driver assistance apparatus according to an embodiment of the present invention;
FIG. 9 is a block diagram illustrating detailed configuration of a processor, shown in FIG. 8, according to an embodiment of the present invention;
FIG. 10 is a flowchart illustrating operation of a driver assistance apparatus according to an embodiment of the present invention;
FIGS. 11 to 15 are views illustrating operation of a driver assistance apparatus based on a type of a line according to an embodiment of the present invention;
FIG. 16 is a view illustrating operation of a driver assistance apparatus based on navigation information according to an embodiment of the present invention;
FIG. 17 is a view illustrating operation of a driver assistance apparatus based on information on a curve in a current driving lane, according to an embodiment of the present invention;
FIGS. 18A to 23B are views illustrating operation of a driver assistance apparatus which changes a position of a preset blind spot area, according to an embodiment of the present invention; and
FIG. 24 is a view illustrating operation of a driver assistance apparatus when a detected nearby vehicle is travelling on a lane which is neither the current driving lane nor a lane next to the current driving lane, according to an embodiment of the present invention.

### DETAILED DESCRIPTION OF THE PREFERRED EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

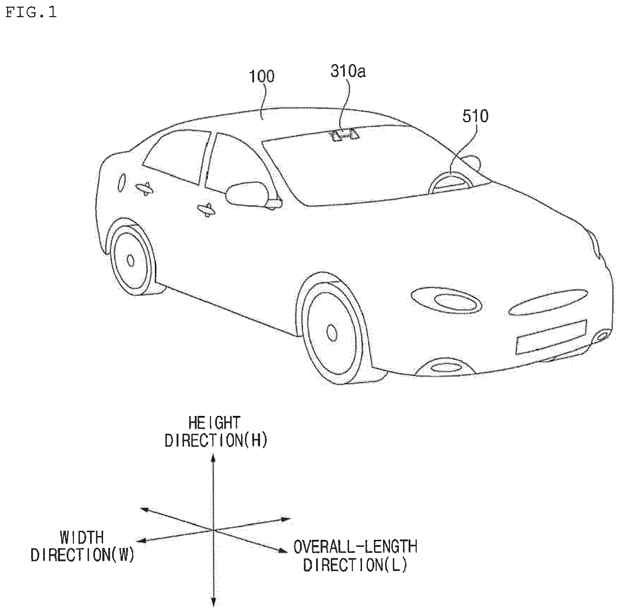

FIG. 1 is a view of the external appearance of a vehicle according to an embodiment of the present invention.

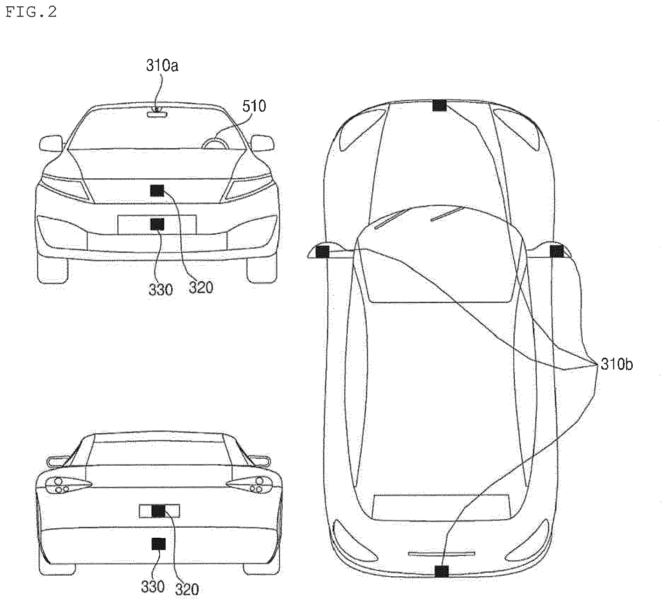

FIG. 2 is different angled views of a vehicle according to an embodiment of the present invention.

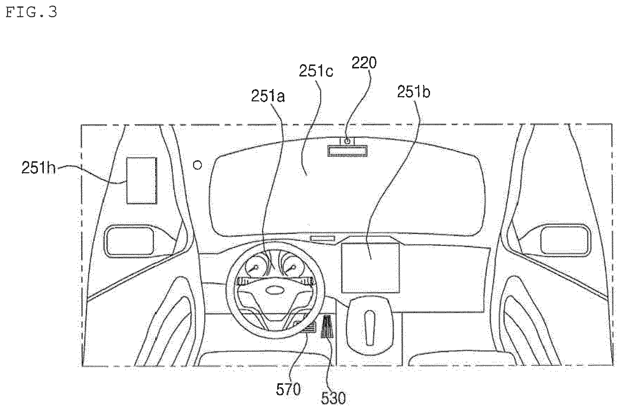

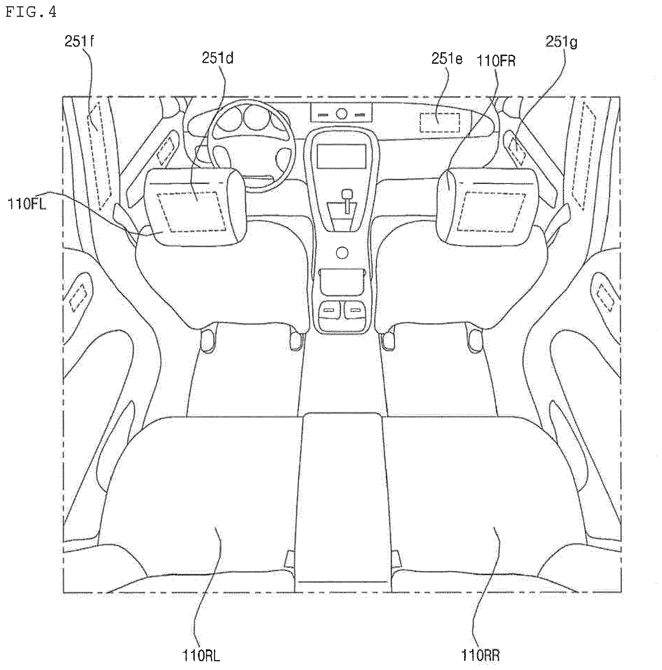

FIGS. 3 and 4 are views of the internal configuration of a vehicle according to an embodiment of the present invention.

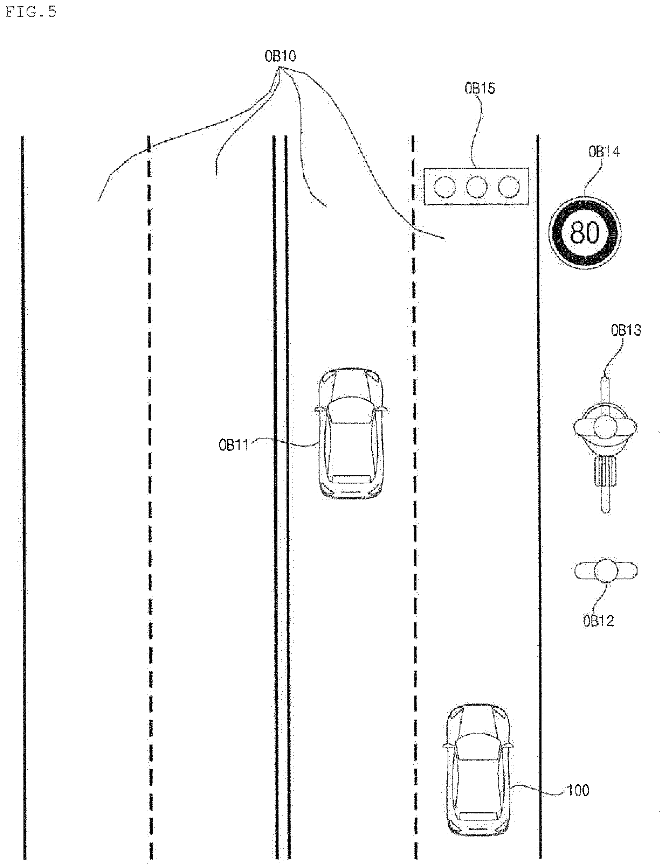

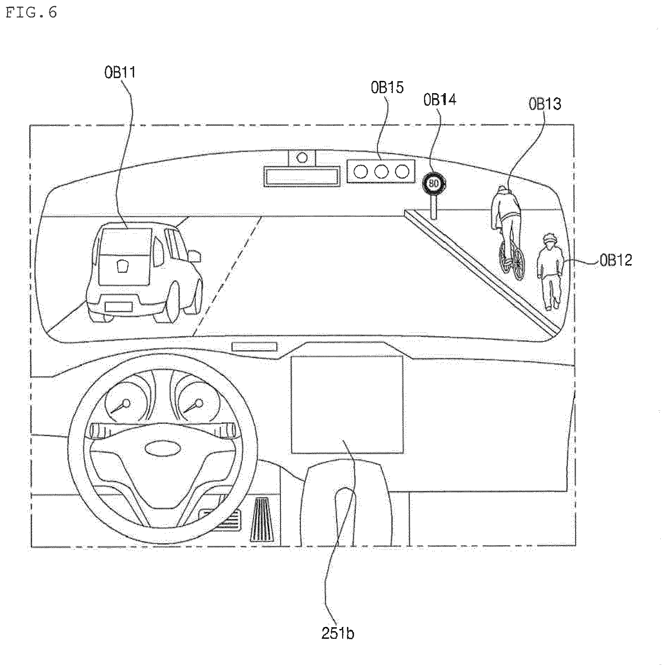

FIGS. 5 and 6 are views for explanation of objects according to an embodiment of the present invention.

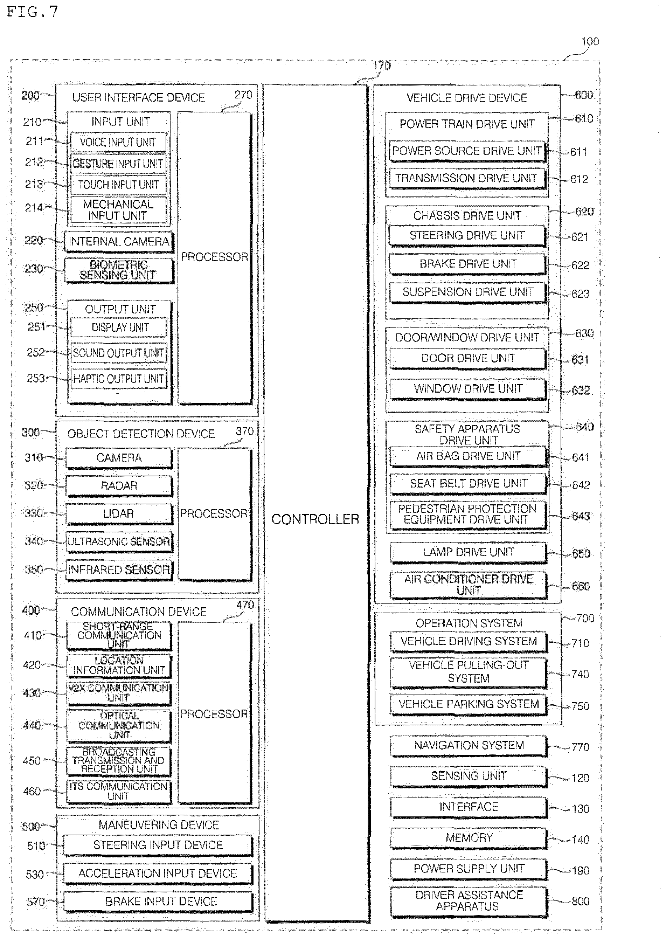

FIG. 7 is a block diagram illustrating a vehicle according to an embodiment of the present invention.

Referring to FIGS. 1 to 7, a vehicle 100 may include a plurality of wheels, which are rotated by a power source, and a steering input device 510 for controlling a driving direction of the vehicle 100.

The vehicle 100 may be an autonomous vehicle.

The vehicle 100 may be switched to an autonomous mode or a manual mode in response to a user input.

For example, in response to a user input received through a user interface apparatus 200, the vehicle 100 may be switched from a manual mode to an autonomous mode, or vice versa.

The vehicle 100 may be switched to the autonomous mode or to the manual mode based on driving environment information.

The driving environment information may include at least one of the following: information on an object outside a vehicle, navigation information, and vehicle state information.

For example, the vehicle 100 may be switched from the manual mode to the autonomous mode, or vice versa, based on driving environment information generated by the object detection device 300.

In another example, the vehicle 100 may be switched from the manual mode to the autonomous mode, or vice versa, based on driving environment information received through a communication device 400.

The vehicle 100 may be switched from the manual mode to the autonomous mode, or vice versa, based on information, data, and a signal provided from an external device.

When the vehicle 100 operates in the autonomous mode, the autonomous vehicle 100 may operate based on an operation system 700.

For example, the autonomous vehicle 100 may operate based on information, data, or signals generated by a driving system 710, a vehicle pulling-out system 740, and a vehicle parking system 750.

While operating in the manual mode, the autonomous vehicle 100 may receive a user input for driving of the vehicle 100 through a maneuvering device 500. In response to the user input received through the maneuvering device 500, the vehicle 100 may operate.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

As illustrated in FIG. 7, the vehicle 100 may include the user interface device 200, the object detection device 300, the communication device 400, the maneuvering device 500, a vehicle drive device 600, the operation system 700, a navigation system 770, a sensing unit 120, an interface 130, a memory 140, a controller 170, and a power supply unit 190.

In some embodiments, the vehicle 100 may further include other components in addition to the aforementioned components, or may not include some of the aforementioned components.

The user interface device 200 is provided to support communication between the vehicle 100 and a user. The user interface device 200 may receive a user input, and provide information generated in the vehicle 100 to the user. The vehicle 100 may enable User Interfaces (UI) or User Experience (UX) through the user interface device 200.

The user interface device 200 may include an input unit 210, an internal camera 220, a biometric sensing unit 230, an output unit 250, and a processor 270.

In some embodiments, the user interface device 200 may further include other components in addition to the aforementioned components, or may not include some of the aforementioned components.

The input unit 210 is configured to receive information from a user, and data collected in the input unit 210 may be analyzed by the processor 270 and then processed into a control command of the user.

The input unit 210 may be disposed inside the vehicle 100. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may convert a gesture input of a user into an electrical signal. The converted electrical signal may be provided to the processor 270 or the controller 170.

The gesture input unit 212 may include at least one selected from among an infrared sensor and an image sensor for sensing a gesture input of a user.

In some embodiments, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense the 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170.

The touch input unit 213 may include a touch sensor for sensing a touch input of a user.

In some embodiments, the touch input unit 210 may be formed integral with a display unit 251 to implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the processor 270 or the controller 170.

The mechanical input unit 214 may be located on a steering wheel, a center fascia, a center console, a cockpit module, a door, etc.

The internal camera 220 may acquire images of the inside of the vehicle 100. The processor 270 may sense a user's condition based on the images of the inside of the vehicle 100. The processor 270 may acquire information on an eye gaze of the user. The processor 270 may sense a gesture of the user from the images of the inside of the vehicle 100.

The biometric sensing unit 230 may acquire biometric information of the user. The biometric sensing unit 230 may include a sensor for acquire biometric information of the user, and may utilize the sensor to acquire finger print information, heart rate information, etc. of the user. The biometric information may be used for user authentication.

The output unit 250 is configured to generate a visual, audio, or tactile output.

The output unit 250 may include at least one selected from among a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface device 200 may include a plurality of display units 251a to 251g.

The display unit 251 may be disposed in a region of a steering wheel, a region 251a, 251b or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface device 200.

In some embodiments, the user interface device 200 may include a plurality of processors 270 or may not include the processor 270.

In a case where the user interface device 200 does not include the processor 270, the user interface device 200 may operate under control of the controller 170 or a processor of a different device inside the vehicle 100.

Meanwhile, the user interface device 200 may be referred to as a display device for vehicle.

The user interface device 200 may operate under control of the controller 170.

The object detection device 300 is used to detect an object outside the vehicle 100. The object detection device 300 may generate object information based on sensing data.

The object information may include information about the presence of an object, location information of the object, information on distance between the vehicle and the object, and the speed of the object relative to the vehicle 100.

The object may include various objects related to travelling of the vehicle 100.

Referring to FIGS. 5 and 6, an object o may include a lane OB10, a nearby vehicle OB11, a pedestrian OB12, a two-wheeled vehicle OB13, a traffic signal OB14 and OB15, a light, a road, a structure, a bump, a geographical feature, an animal, etc.

The lane OB10 may be a lane in which the vehicle 100 is traveling (hereinafter, referred to as the current driving lane), a lane next to the current driving lane, and a lane in which a vehicle travelling in the opposite direction is travelling. The lane OB10 may include left and right lines that define the lane.

The nearby vehicle OB11 may be a vehicle that is travelling in the vicinity of the vehicle 100. The nearby vehicle OB11 may be a vehicle within a predetermined distance from the vehicle 100. For example, the nearby vehicle OB11 may be a vehicle that is preceding or following the vehicle 100.

The pedestrian OB12 may be a person in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle that is located in the vicinity of the vehicle 100 and moves with two wheels. The two-wheeled vehicle OB13 may be a vehicle that has two wheels within a predetermined distance from the vehicle 100. For example, the two-wheeled vehicle OB13 may be a motorcycle or a bike on a sidewalk or the roadway.

The traffic signal may include a traffic light OB15, a traffic sign plate OB14, and a pattern or text painted on a road surface.

The light may be light generated by a lamp provided in the nearby vehicle. The light may be light generated by a street light. The light may be solar light.

The road may include a road surface, a curve, and slopes, such as an upward slope and a downward slope.

The structure may be a body located around the road in the state of being fixed onto the ground. For example, the structure may include a streetlight, a roadside tree, a building, a traffic light, and a bridge.

The geographical feature may include a mountain and a hill.

Meanwhile, the object may be classified as a movable object or a stationary object. For example, the movable object may include a nearby vehicle and a pedestrian. For example, the stationary object may include a traffic signal, a road, and a structure.

The object detection device 300 may include a camera 310, a radar 320, a lidar 330, an ultrasonic sensor 340, an infrared sensor 350, and a processor 370.

In some embodiments, the object detection device 300 may further include other components in addition to the aforementioned components, or may not include some of the aforementioned components.

The camera 310 may be located at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

Using various image processing algorithms, the camera 310 may acquire location information of an object, information on distance to the object, and information on speed relative to the object.

For example, based on change in size over time of an object in acquired images, the camera 310 may acquire information on distance to the object and information on speed relative to the object.

For example, the camera 310 may acquire the information on distance to the object and the information on speed relative to the object by utilizing a pin hole model or by profiling a road surface.

For example, the camera 310 may acquire the information on distance to the object and the information on the speed relative to the object, based on information on disparity of stereo images acquired by a stereo camera 310a.

For example, the camera 310 may be disposed near a front windshield in the vehicle 100 in order to acquire images of the front of the vehicle 100. Alternatively, the camera 310 may be disposed around a front bumper or a radiator grill.

In another example, the camera 310 may be disposed near a rear glass in the vehicle 100 in order to acquire images of the rear of the vehicle 100. Alternatively, the camera 310 may be disposed around a rear bumper, a trunk, or a tailgate.

In yet another example, the camera 310 may be disposed near at least one of the side windows in the vehicle 100 in order to acquire images of the side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object.

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme.

The lidar 330 may be implemented as a drive type lidar or a non-drive type lidar.

When implemented as the drive type lidar, the lidar 300 may rotate by a motor and detect an object in the vicinity of the vehicle 100.

When implemented as the non-drive type lidar, the lidar 300 may utilize a light steering technique to detect an object located within a predetermined distance from the vehicle 100.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 340 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The processor 370 may control the overall operation of each unit of the object detection device 300.

The processor 370 may detect and track an object based on acquired images. The processor 370 may, for example, calculate the distance to the object and the speed relative to the object.

For example, the processor 370 may acquire information on the distance to the object and information on the speed relative to the object based on a variation in size over time of the object in acquired images.

In another example, the processor 370 may acquire information on the distance to the object or information on the speed relative to the object by employing a pin hole model or by profiling a road surface.

In yet another example, the processor 370 may acquire information on the distance to the object and information on the speed relative to the object based on information on disparity of stereo images acquired from the stereo camera 310a.

The processor 370 may detect and track an object based on a reflection electromagnetic wave which is formed as a result of reflection a transmission electromagnetic wave by the object. Based on the electromagnetic wave, the processor 370 may, for example, calculate the distance to the object and the speed relative to the object.

The processor 370 may detect and track an object based on a reflection laser light which is formed as a result of reflection of transmission laser by the object. Based on the laser light, the processor 370 may, for example, calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may, for example, calculate the distance to the object and the speed relative to the object.

The processor 370 may detect and track an object based on reflection infrared light which is formed as a result of reflection of transmission infrared light by the object. Based on the infrared light, the processor 370 may, for example, calculate the distance to the object and the speed relative to the object.

In some embodiments, the object detection device 300 may include a plurality of processors 370 or may not include the processor 370. For example, each of the camera 310, the radar 320, the lidar 330, the ultrasonic sensor 340, and the infrared sensor 350 may include its own processor.

In a case where the object detection device 300 does not include the processor 370, the object detection device 300 may operate under control of the controller 170 or a processor inside the vehicle 100.

The object detection device 300 may operate under control of the controller 170.

The communication device 400 is configured to perform communication with an external device. Here, the external device may be a nearby vehicle, a mobile terminal, or a server.

To perform communication, the communication device 400 may include at least one selected from among a transmission antenna, a reception antenna, a Radio Frequency (RF) circuit capable of implementing various communication protocols, and an RF device.

The communication device 400 may include a short-range communication unit 410, a location information unit 420, a V2X communication unit 430, an optical communication unit 440, a broadcast transmission and reception unit 450, an Intelligent Transport Systems (ITS) communication unit 460, and a processor 470.

In some embodiments, the communication device 400 may further include other components in addition to the aforementioned components, or may not include some of the aforementioned components.

The short-range communication unit 410 is configured to perform short-range communication. The short-range communication unit 410 may support short-range communication using at least one selected from among BluetoothTM, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include a Global Positioning System (GPS) module or a Differential Global Positioning System (DGPS) module.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian(V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some embodiments, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system and provide the traffic information to the controller 170. In another example, the ITS communication unit 460 may receive a control signal from the traffic system, and provide the control signal to the controller 170 or a processor provided in the vehicle 100.

The processor 470 may control the overall operation of each unit of the communication device 400.

In some embodiments, the communication device 400 may include a plurality of processors 470, or may not include the processor 470.

In a case where the communication device 400 does not include the processor 470, the communication device 400 may operate under control of the controller 170 or a processor of a device inside of the vehicle 100.

Meanwhile, the communication device 400 may implement a vehicle display device, together with the user interface device 200. In this case, the vehicle display device may be referred to as a telematics device or an Audio Video Navigation (AVN) device.

The communication device 400 may operate under control of the controller 170.

The maneuvering device 500 is configured to receive a user input for driving the vehicle 100.

In the manual mode, the vehicle 100 may operate based on a signal provided by the maneuvering device 500.

The maneuvering device 500 may include a steering input device 510, an acceleration input device 530, and a brake input device 570.

The steering input device 510 may receive a user input with regard to the direction of travel of the vehicle 100. The steering input device 510 may take the form of a wheel to enable a steering input through the rotation thereof. In some embodiments, the steering input device may be provided as a touchscreen, a touch pad, or a button.

The acceleration input device 530 may receive a user input for acceleration of the vehicle 100. The brake input device 570 may receive a user input for deceleration of the vehicle 100. Each of the acceleration input device 530 and the brake input device 570 may take the form of a pedal. In some embodiments, the acceleration input device or the break input device may be configured as a touch screen, a touch pad, or a button.

The maneuvering device 500 may operate under control of the controller 170.

The vehicle drive device 600 is configured to electrically control the operation of various devices of the vehicle 100.

The vehicle drive device 600 may include a power train drive unit 610, a chassis drive unit 620, a door/window drive unit 630, a safety apparatus drive unit 640, a lamp drive unit 650, and an air conditioner drive unit 660.

In some embodiments, the vehicle drive device 600 may further include other components in addition to the aforementioned components, or may not include some of the aforementioned components.

Meanwhile, the vehicle drive device 600 may include a processor. Each unit of the vehicle drive device 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 611 may perform electronic control of the engine. As such the power source drive unit 611 may control, for example, the output torque of the engine. The power source drive unit 611 may adjust the output toque of the engine under control of the controller 170.

In a case where an electric motor is the power source, the power source drive unit 611 may control the motor. The power source drive unit 610 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in a case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

Meanwhile, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive device 600 may include a processor. Each unit of the vehicle dive device 600 may include its own processor.

The vehicle drive device 600 may operate under control of the controller 170.

The operation system 700 is a system for controlling the overall driving operation of the vehicle 100. The operation system 700 may operate in the autonomous driving mode.

The operation system 700 may include the driving system 710, the vehicle pulling-out system 740, and the vehicle parking system 750.

In some embodiments, the operation system 700 may further include other components in addition to the aforementioned components, or may not include some of the aforementioned component.

Meanwhile, the operation system 700 may include a processor. Each unit of the operation system 700 may include its own processor.

Meanwhile, in some embodiments, in a case where the operation system 700 is implemented as software, the operation system 700 may be a subordinate concept of the controller 170.

Meanwhile, in some embodiments, the operation system 700 may be a concept including at least one selected from among the user interface device 200, the object detection device 300, the communication device 400, the vehicle drive device 600, and the controller 170.

The driving system 710 may perform driving of the vehicle 100.

The driving system 710 may perform driving of the vehicle 100 by providing a control signal to the vehicle drive device 600 in response to reception of navigation information from the navigation system 770.

The driving system 710 may perform driving of the vehicle 100 by providing a control signal to the vehicle drive device 600 in response to reception of object information from the object detection device 300.

The driving system 710 may perform driving of the vehicle 100 by providing a control signal to the vehicle drive device 600 in response to reception of a signal from an external device through the communication device 400.

The vehicle pulling-out system 740 may perform an operation of pulling the vehicle 100 out of a parking space.

The vehicle pulling-out system 740 may perform an operation of pulling the vehicle 100 out of a parking space, by providing a control signal to the vehicle drive device 600 in response to reception of navigation information from the navigation system 770.

The vehicle pulling-out system 740 may perform an operation of pulling the vehicle 100 out of a parking space, by providing a control signal to the vehicle drive device 600 in response to reception of object information from the object detection device 300.

The vehicle pulling-out system 740 may perform an operation of pulling the vehicle 100 out of a parking space, by providing a control signal to the vehicle drive device 600 in response to reception of a signal from an external device.

The vehicle parking system 750 may perform an operation of parking the vehicle 100 in a parking space.

The vehicle parking system 750 may perform an operation of parking the vehicle 100 in a parking space, by providing a control signal to the vehicle drive device 600 in response to reception of navigation information from the navigation system 770.

The vehicle parking system 750 may perform an operation of parking the vehicle 100 in a parking space, by providing a control signal to the vehicle drive device 600 in response to reception of object information from the object detection device 300.

The vehicle parking system 750 may perform an operation of parking the vehicle 100 in a parking space, by providing a control signal to the vehicle drive device 600 in response to reception of a signal from an external device.

The navigation system 770 may provide navigation information. The navigation information may include at least one selected from among map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some embodiments, the navigation system 770 may update pre-stored information by receiving information from an external device through the communication device 400.

In some embodiments, the navigation system 770 may be classified as an element of the user interface device 200.

The sensing unit 120 may sense the state of the vehicle. The sensing unit 120 may include an attitude sensor (for example, a yaw sensor, a roll sensor, or a pitch sensor), a collision sensor, a wheel sensor, a speed sensor, a gradient sensor, a weight sensor, a heading sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The sensing unit 120 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, outside illumination information, information about the pressure applied to an accelerator pedal, and information about the pressure applied to a brake pedal.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The sensing unit 120 may generate vehicle state information based on sensing data. The vehicle condition information may be information that is generated based on data sensed by a variety of sensors inside a vehicle.

For example, the vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some embodiments, the memory 140 may be integrally formed with the controller 170, or may be provided as an element of the controller 170.

The controller 170 may control the overall operation of each unit inside the vehicle 100. The controller 170 may be referred to as an Electronic Controller (ECU).

The power supply unit 190 may supply power required to operate each component under control of the controller 170. In particular, the power supply unit 190 may receive power from, for example, a battery inside the vehicle 100.

At least one processor and the controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

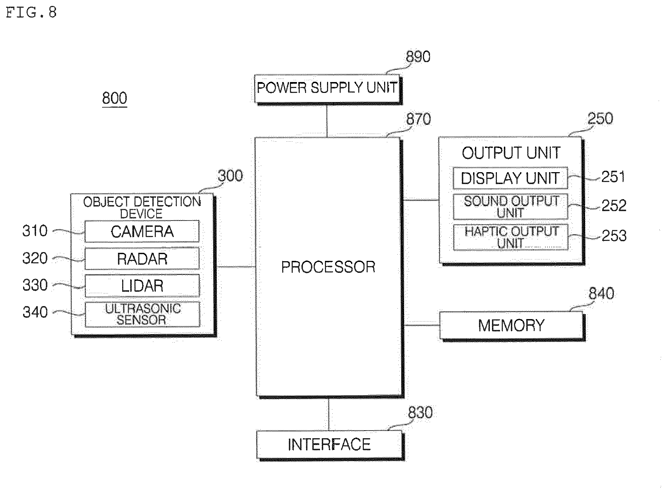

FIG. 8 is a block diagram illustrating a driver assistance apparatus according to an embodiment of the present invention.

Referring to FIG. 8, a driver assistance apparatus 800 may include an object detection device 300, an output unit 250, an interface 830, a memory 840, a processor 870, and a power supply unit 890.

The description provided above about the object detection device 300 with reference to FIGS. 1 to 7 may be applied to the object detection device 300 shown in FIG. 8.

The object detection device 300 may include a camera 310, a radar 320, a lidar 330, and an ultrasonic sensor 340.

The camera 310 may acquire a vehicle around image.

The radar 320 may detect an object in the vicinity of a vehicle, and generate object information. For example, the radar 320 may detect an object located in a lane next to the current driving lane, and generate object information.

The lidar 330 may detect an object in the vicinity of a vehicle, and generate object information. For example, the lidar 330 may detect an object located in a lane next to the current driving lane, and generate object information.

The ultrasonic sensor 340 may detect an object in the vicinity of a vehicle, and generate an object information. For example, the ultrasonic sensor 340 may detect an object located in a lane next to the current driving lane, and generate object information.

The description provided above about the output unit 250 of the user interface device 200 with reference to FIGS. 1 to 7 may be applied to the object detection device 250 shown in FIG. 8.

The output unit 250 is described as a component of the user interface device 200 with reference to FIGS. 1 to 7, the, but the output unit 250 may be classified as a component of the driver assistance apparatus 800.

The output unit 250 may include a display unit 251, a sound output unit 252, and a haptic output unit 253.

The output unit 250 may output a warning under control of the processor 870.

The display unit 251 may output a visual warning under control of the processor 870.

In some embodiments, the display unit 251 may be included in at least one of the following: a region of a side mirror, a region of an A-pillar, a region of a wind shield, a region of a room mirror, and a region of a window.

The sound output unit 252 may output a sound warning under control of the processor 870.

The haptic output unit 253 may output a tactile warning under control of the processor 870.

The output unit 250 may selectively output the visual warning, the sound warning, or the tactile warning based on driving situation information.

For example, if object information is acquired, the output unit 250 may output a visual warning or a sound warning under control of the processor 870.

In another example, if object information is acquired when a turn signal input is being received, the output unit 250 may output a tactile warning under control of the processor 870.

The interface unit 830 may exchange information, data, or a signal with a different device included in the vehicle 100.

Specifically, the interface 830 may exchange information, data, or a signal with at least one device of system from among the user interface device 200, the communication device 400, the maneuvering device 500, the vehicle drive device 600, the operation system 700, the navigation system 770, the sensing unit 120, the memory 140, and the controller 170.

The interface 830 may receive information, data, or a signal via the communication device 400.

For example, the interface 830 may receive route information of a different vehicle, the information which is received by the communication device 400 from the different vehicle.

The memory 840 is electrically connected to the controller 170. The memory 140 may store basic data for each unit, control data for the operational control of each unit, and input/output data. The memory 840 may be any of various hardware storage devices, such as a ROM, a RAM, an EPROM, a flash drive, and a hard drive. The memory 840 may store various data for the overall operation of the driver assistance apparatus 800, such as programs for the processing or control of the processor 870.

The processor 870 may control the overall operation of each unit of the driver assistance apparatus 800.

The processor 870 may receive a vehicle around image acquired by the camera 310.

The processor 870 may perform image processing on a vehicle around image.

The processor 870 may detect the current driving lane based on the vehicle around image. The current driving lane may be a lane in which the vehicle 100 is located.

The processor 870 may determine a type of a line that separates the current driving lane.

The processor 870 may determine whether the line separating the current driving lane is a line which is permitted to be crossed.

For example, the processor 870 may determine that a center line is a line which is not permitted to be crossed.

In another example, the processor 870 may determine that a slid line is a line which is not permitted to be crossed.

In yet another example, the processor 870 may determine that a dotted line is a line which is permitted to be crossed.

The processor 870 may acquire information on an object. For example, the processor 870 may acquire information on an object located in a lane next to the current driving lane.

Based on a vehicle around image, the processor 870 may acquire information on an object located in a lane next to the current driving lane.

The processor 870 may receive object information generated by at least one of the radar 320, the lidar 330, and the ultrasonic sensor 340. In this case, the processor 870 may match the object information with a vehicle around image to acquire information on an object located in a lane next to the current driving lane.

Based on the current driving lane and the information on an object, the processor 870 may determine whether to output a warning via the output unit 250.

Based on the type of a line and the information on an object, the processor 870 may determine whether to output a warning via the output unit 250.

The object may be a nearby vehicle. In this case, the processor 870 may acquire route information of the nearby vehicle via the interface 830 and the communication device 400. Based on the route information of the nearby vehicle, the processor 870 may determine whether to output a warning form the output unit 250.

For example, if the route information shows that a nearby vehicle travelling in a lane next to the current driving lane is about to make a left turn, a right turn, or a U turn, collision is not expected to occur when the vehicle 100 changes a lane. In this case, although the nearby vehicle is detected, a warning is not output and thus user inconvenience due to unnecessary warning may be addressed.

For example, if the other vehicle is scheduled to make a left turn in the left lane of the driving lane, there is no risk of collision between the vehicle 100 and another vehicle, when the vehicle 100 changes lanes in a situation where the vehicle 100 passes the left turn point of the other vehicle.

For example, if the other vehicle is scheduled to make a right turn in the right lane of the driving lane, there is no risk of collision between the vehicle 100 and another vehicle, when the lane is changed in a situation where the vehicle 100 passes the right turning point of the other vehicle.

For example, if the other vehicle is scheduled to make a U-turn in the left lane of the driving lane, there is no risk of collision between the vehicle 100 and the other vehicle, when the lane is changed in the situation where the vehicle 100 has passed the U-turn point of the other vehicle.

The processor 870 may determine that a line separating the current driving lane is a line which is permitted to be crossed. In this case, based on a result of the determination, the processor 870 may determine whether to output a warning via the output unit 250.

The processor 870 may determine that a line separating the current driving lane is a line which is not permitted to be crossed. In this case, if an object is detected in a lane next to the line not permitted to be crossed, the processor 870 may control the output unit 250 to not output a warning.

In another example, the current driving lane may be separated by a center line. The processor 870 may detect the center line based on a vehicle around image. The processor 870 may acquire information on detection of a nearby vehicle which is travelling in a lane on the opposite side of the center line from the current driving lane. In this case, the processor 870 may control the output unit 250 to not output a warning.

In yet another example, the processor 870 may detect a guardrail based on a vehicle around image. The processor 870 may acquire information on detection of a nearby vehicle which is travelling in a lane on the opposite side of the guardrail from the current driving lane. In this case, the processor 870 may control the output unit 250 to not output a warning.

In yet another example, the current driving lane may be separated by a solid line. The processor 870 may detect the solid line based on a vehicle around image. The processor 870 may acquire information on detection of a nearby vehicle which is travelling in a lane next to the current driving lane with the solid line therebetween. In this case, the processor 870 may control the output unit 250 to not output a warning.

In yet another example, the current driving lane may be located next to a sidewalk. The processor 870 may detect the sidewalk based on a vehicle around image. Based on a line separating the current driving lane and the sidewalk, the processor 870 may determine whether to output a warning. The processor 870 may acquire information on detection of an object located on the sidewalk. Based on the line separating the current driving lane and the sidewalk, the processor 870 may determine whether an object is located on the sidewalk or the roadway. If the object is located on the sidewalk, the processor 870 may control the output unit 250 to not output a warning.

The processor 870 may receive navigation information from the navigation system 770 via the interface 830.

The processor 870 may determine, based on the navigation information, whether to output a warning via the output unit 250.

The processor 870 may match information on the current driving lane with the navigation information. The processor 870 may determine, based on a matching result, whether to output a warning via the output unit 250.

The processor 870 may receive turn signal input information from the interface 830. The turn signal input information may be received from the user interface device 200, the controller 170, or the vehicle drive device 600.

The processor 870 may determine, based on the turn signal input information, whether to output a warning via the output unit 250.

The navigation information may include route information of the vehicle 100. When turn signal input information which corresponds to route information is being received, the processor 870 may acquire information on detection of an object located in a next lane in a direction of a turn signal. In this case, the processor 870 may output the output unit 250 to not output a warning.

In yet another example, the current driving lane may be a left turn lane. The processor 870 may determine a left turn lane based on a vehicle around image. For example, based on a pattern or text printed on the road surface, the processor 870 may determine that the current driving lane is a left turn lane. The processor 870 may receive turn signal input information intended to make a left turn in the current driving lane. The processor 870 may acquire information on detection of an object located in a lane on the left side of the current driving lane. In this case, the processor 870 may control the output unit 250 to not output a warning.

Meanwhile, based on whether navigation information, an input time of a turn signal, and direction information match, the processor 870 may determine whether a turn signal intended to make a left turn is input.

In yet another example, the current driving lane may be a right turn lane. The processor 870 may determine a right turn lane based on a vehicle around image. For example, based on a pattern or text printed on the road surface, the processor 870 may determine that the current driving lane is a right turn lane. Then, the processor 870 may receive turn signal input information intended to make a left turn in the current driving lane. Then, the processor 870 may acquire information on detection of an object located in a lane on the right side of the current driving lane. In this case, the processor 870 may control the output unit 250 to not output a warning.

Meanwhile, based on whether navigation information, an input time of a turn signal, and direction information match, the processor 870 may determine whether a turn signal intended to make a right turn is input.

The processor 870 may acquire information on a curve in the current driving lane. For example, the processor 870 may acquire information on a curve in the current driving lane based on a vehicle around image. In another example, the processor 870 may acquire the information on a curve in the current driving lane based on navigation information.

The information on a curve may include information about the presence of a curve, and curvature information of the curve.

Based on information on a curve in the current driving lane, the processor 870 may determine whether to output a warning via the output unit 250.

The processor 870 may acquire information indicating a state in which the vehicle 100 is travelling around a curve. For example, based on a vehicle around image or navigation information, the processor 870 may determine that the vehicle 100 is travelling around a curve.

When the vehicle 100 is travelling around a curve, the processor 870 may determine, based on a vehicle around image, whether a detected nearby vehicle is travelling in the current driving lane.

When the nearby vehicle is determined to be travelling in the current driving lane, the processor 870 may control the output unit 250 to not output a warning.

The processor 870 may acquire curvature information of the curve. The processor 870 may control change of a preset blind spot area based on the curvature information.

The processor 870 may acquire driving situation information of the vehicle 100.

The driving situation information of the vehicle 100 may include at least one of the following: information about a pulling-out situation of the vehicle 100, information about a left-turn situation of the vehicle 100, information about a right-turn situation of the vehicle 100, information about a U-turn situation of the vehicle 100, and information about a curve-travelling situation of the vehicle 100

The driving situation information of the vehicle 100 may include a type of line that separates the current driving lane on which the vehicle 100 is travelling.

The driving situation information of the vehicle 100 may include information on an object in the vicinity of the vehicle 100.

The driving situation information of the vehicle 100 may include weather information and time information, each of which corresponds to the current travel time of the vehicle 100.

The processor 870 may control change of the preset blind spot area based on the driving situation information.

For example, the processor 870 may acquire the pulling-out situation information. In this case, the processor 870 may change the position of the preset blind spot area toward the direction of travel of the vehicle 100.

In another example, the processor 870 may acquire information about a left-turn situation. In this case, the processor 870 may change the position of the preset blind spot area toward the direction of travel of the vehicle 100.

In yet another example, the processor 870 may acquire information about a right-turn situation. In this case, the processor 870 may change the position of the preset blind spot area toward the direction of travel of the travel 100.

In yet another example, the processor 870 may acquire information about a U-turn situation. In this case, the processor 870 may change the position of the preset blind spot area toward the direction of travel of the vehicle 100.

The processor 870 may determine, based on a vehicle around image, whether a detected nearby vehicle is travelling in a lane which is neither the current driving lane nor a lane next to the current driving lane.

When the nearby vehicle is travelling in a lane which is neither the current driving lane nor a lane next to the current driving lane, the processor 870 may control the output unit 250 to not output a warning.

Under control of the processor 870, the power supply unit 890 may supply power required for operation of each component. In particular, the power supply unit 890 may be supplied with power from a battery inside the vehicle 100.

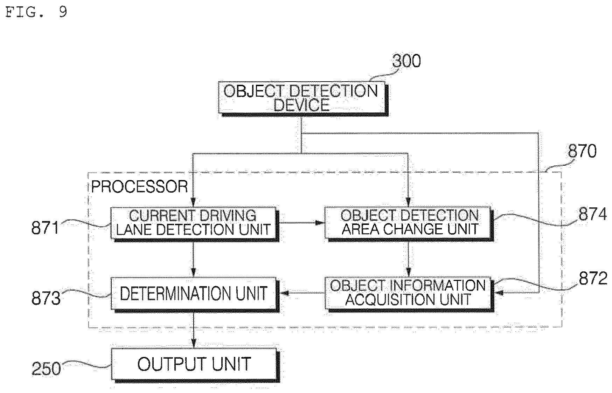

FIG. 9 is a block diagram illustrating detailed configuration of a processor, shown in FIG. 8, according to an embodiment of the present invention.

Referring to FIG. 9, the processor 870 may include a current driving lane detection unit 871, an object information acquisition unit 872, a determination unit 873, and a blind spot area change unit 874.

The current driving lane detection 871 may detect the current driving lane based on a vehicle around image.

The current driving lane detection unit 871 may detect a line separating the current driving lane. The current driving lane detection unit 871 may determine a type of the line that separates the current driving lane.

For example, the current driving lane detection unit 871 may determine whether the line separating the current driving lane is a line which is permitted to be crossed.

The current driving lane detection unit 871 may detect a center line as a line that separates the current driving lane. The current driving lane detection unit 871 may determine that the center line is a line which is not permitted to be crossed.

The current driving lane detection unit 871 may detect a guardrail as a line that separates the current driving lane. The current driving lane detection unit 871 may determine that the guardrail is a line which is not permitted to be crossed.

The current driving lane detection unit 871 may detect a solid line as a line that separates the current driving lane. The current driving lane detection unit 871 may determine that the solid line is a line which is not permitted to be crossed.

The current driving lane detection unit 871 may detect a curb, separating a roadway and a sidewalk from each other, as a line that separates the current driving lane. The current driving lane detection unit 871 may determine that the curb is a line which is not permitted to be crossed.

The current driving lane detection unit 871 may detect a dotted line as a line that separates the current driving lane. The current driving lane detection unit 871 may determine that the dotted line is a line which is permitted to be crossed.

The object information acquisition unit 872 may acquire object information. An object may be a nearby vehicle located in a lane next to the current driving lane.

The object information acquisition unit 872 may acquire object information based on a vehicle around image.

The object information acquisition unit 872 may receive object information generated by at least one of the radar 320, the lidar 330, and the ultrasonic sensor 340. In this case, the object information acquisition unit 872 may match object information with a vehicle around image to acquire information on an object located in a lane next to the current driving lane.

Meanwhile, in some embodiments, the object information acquisition unit 872 may detect an object from an area changed by the blind spot area change unit 874.

Based on the current driving lane and object information, the determination unit 873 may determine whether to output a warning via the output unit 250.

Based on route information of a nearby vehicle, the determination unit 873 may determine whether to output a warning.

Based on navigation information, the determination unit 873 may determine whether to output a warning.

Based on information on a curve, the determination unit 873 may determine whether to output a warning.

The blind spot area change unit 874 may change a blind spot area based on driving situation information. Driving situation information of the vehicle 100 may include at least one of the following: information about a pulling-out situation the vehicle 100, information about a left-turn situation of the vehicle 100, information about a right-turn situation of the vehicle 100, and information about a U-turn situation of the vehicle 100.

The blind spot area change unit 874 may change a blind spot area based on curvature information of a curve.

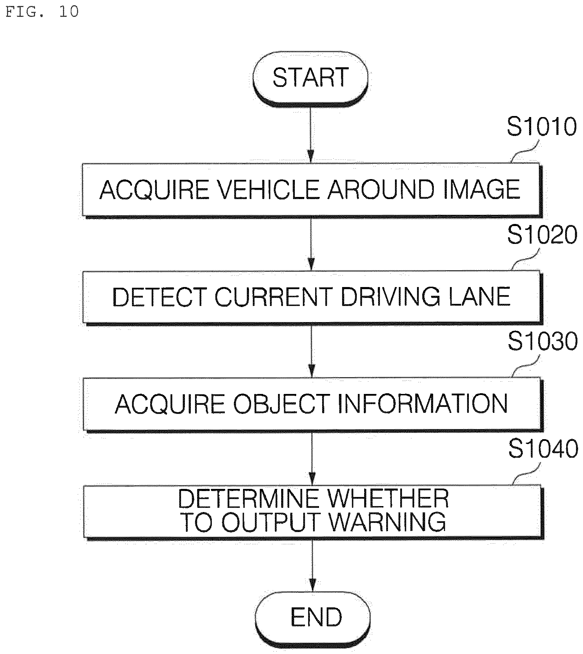

FIG. 10 is a flowchart illustrating operation of a driver assistance apparatus according to an embodiment of the present invention.

Referring to FIG. 10, the processor 870 may acquire a vehicle around image in S1010.

The processor 870 may detect the current driving lane based on the vehicle around image in S1020.

The processor 870 may acquire information on an object in S1030. The object may be a nearby vehicle located in a lane next to the current driving lane.

The processor 870 may detect an object based on a vehicle around image, and generate information on the object.

The processor 870 may receive object information generated by at least one of the radar 320, the lidar 330, and the ultrasonic sensor 340. In this case, the processor 870 may match the object information with a vehicle around image to acquire information on an object located in a lane next to the current driving lane.

Meanwhile, referring to FIG. 10, object information is described as being acquired after the current driving lane is detected, but the processor 870 may detect the current driving lane after acquiring the object information.

Then, based on the current driving lane and the object information, the processor 870 may determine whether to output a warning via the output unit 250 in S1040.

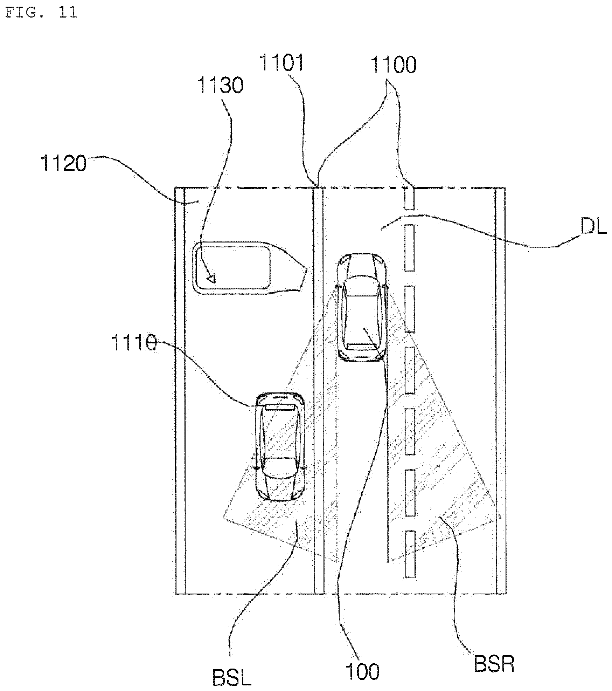

FIGS. 11 to 15 are views illustrating operation of a driver assistance apparatus based on a type of a line according to an embodiment of the present invention.

Referring to FIG. 11, the processor 870 may detect a current driving lane DL, on which the vehicle 100 is located, based on a vehicle around image.

The processor 870 may determine a line 1100 that separates the current driving lane DL.

The line 1100 separating the current driving lane DL may be a concept including a center line, a solid line, a dotted line, a guardrail, and a curb which separates a roadway and a sidewalk from each other.

In some embodiments, the line 1100 separating the current driving lane DL may be a combination of two or more of the center line, the solid line, the dotted line, the guardrail, and the curb.

The processor 870 may acquire information on an object 1110. The object 1110 may be a nearby vehicle located in a lane 1120 next to the current driving lane DL.

Based on the type of the line 1100 and the information on the object 1110, the processor 870 may determine whether to output a warning 1130 from the output unit.

In FIG. 11, an image displayed in a region of a side mirror through the display unit 251 is demonstrated as an example of the warning 1130, but a warning may be output through the sound output unit 252 or the haptic output unit 253.

In some embodiments, the processor 870 may output a warning via a combination of two or more of the display unit 251, the sound output unit 252, and the haptic output unit 253.

The processor 870 may determine that the line 1100 is a line which is permitted to be crossed. The processor 870 may determine that the line 1100 is a line not permitted to be crossed.

That is, the processor 870 may determine whether the line 1100 is a line that the vehicle 1100 is allowed to cross in order to change a lane or to make a U-turn, a left turn, or a right turn.

As illustrated in FIG. 11, the current driving lane DL may be separated by a center line 1101. The processor 870 may detect the center line 1101 based on a vehicle around image. The processor 870 may acquire information on detection of a nearby vehicle 1110 that is travelling in a lane 1120 on the opposite side of the center line 1101 from the current driving lane DL. In this case, the processor 870 may control the output unit 250 to not output a warning.

Meanwhile, the processor 870 may detect an object based on preset blind spot areas BSL and BSR. The blind spot areas BSL and BSR may be set based on a probability of collision with an object in the case where the vehicle 100 encounters the object when changing a lane.

In the situation as shown in FIG. 11, a conventional blind spot detection device detects the nearby vehicle 110 and outputs a warning. In such a case, an unnecessary warning is output, causing a driver to feel nervous and therefore resulting in inconvenience.

The driver assistance apparatus 800 according to an embodiment of the present invention controls a warning to not be output in the situation as shown in FIG. 11, thereby preventing the inconvenience that the driver may feel when using the conventional device.

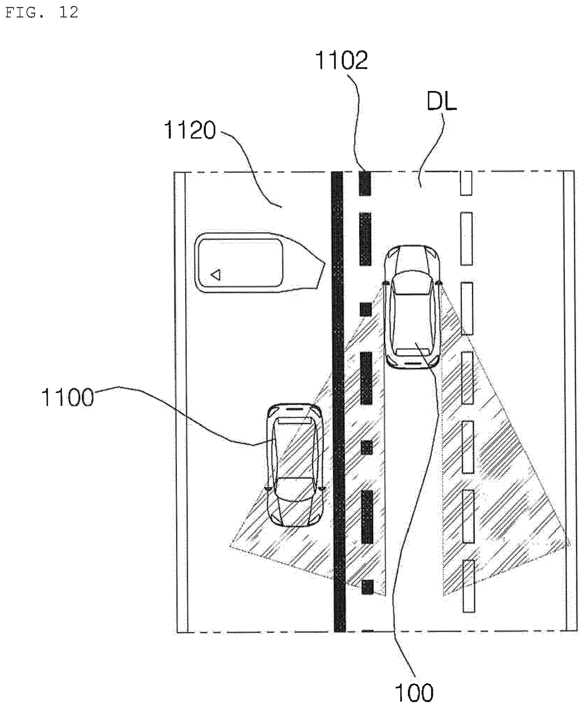

As illustrated in FIG. 12, in a case where even a center line is permitted to be crossed by the vehicle 100, the driver assistance apparatus 800 may output a warning.

The processor 870 may detect a center line based on a vehicle around image. The center line may be double lines. Out of the double lines, a line 1102 close to the current driving lane DL may be a dotted line. In this case, the vehicle 100 is allowed to cross the center line to make a left turn or a U-turn. The processor 870 may acquire information on detection of the nearby vehicle 1110 travelling in a lane 1120 on the opposite side of the center line from the current driving lane DL. In this case, the processor 870 may control the output unit 250 to output a warning.

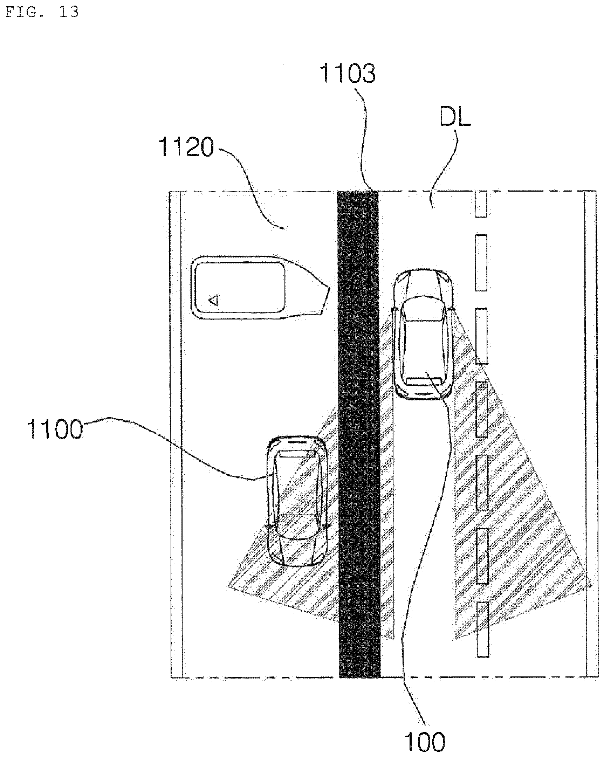

As illustrated in FIG. 13, the current driving lane DL may be separated by a guardrail 1103. The processor 870 may detect the guardrail 1103 based on a vehicle around image. The processor 870 may acquire information on detection of a nearby vehicle 1110 travelling in a lane 1120 on the opposite side of the guardrail 1103 from the current driving lane DL. In this case, the processor 870 may control the output unit 250 to not output a warning.

In the situation as shown in FIG. 13, a conventional blind spot detection device detects the nearby vehicle 1110 and outputs a warning. In such a case, a warning may be output unnecessarily, thereby causing a driver to feel nervous and therefore resulting in inconvenience.

The driver assistance apparatus according to an embodiment of the present invention controls a warning to not be output in the situation as shown in FIG. 13, thereby preventing the inconvenience that the driver may feel when using the conventional device.

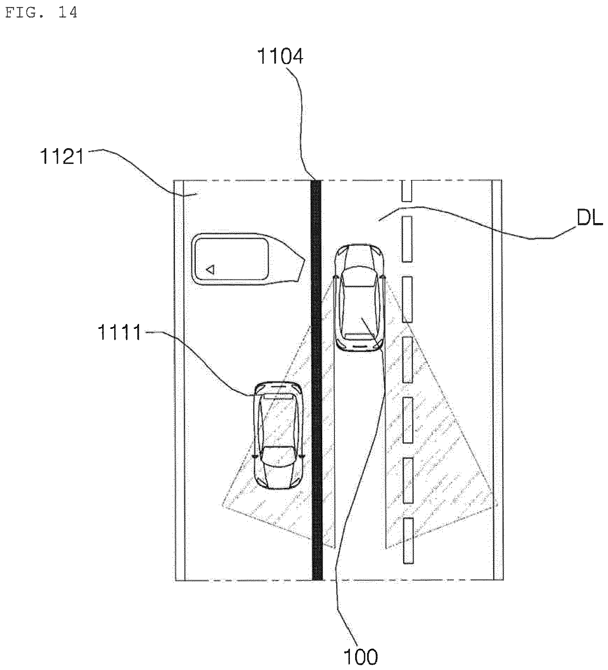

As illustrated in FIG. 14, the current driving lane DL may be separated by a solid line 1104. The processor 870 may detect the solid line 1104 based on a vehicle around image. The processor 870 may acquire information on detection of a nearby vehicle 1111 travelling in a lane 1121 next to the current driving lane DL with the solid line 1104 therebetween. In this case, the processor 870 may control the output unit 250 to not output a warning.

In the situation as shown in FIG. 14, a conventional blind spot detection device detects the nearby vehicle 1111 and outputs a warning. In such a case, an unnecessary warning is output, causing a driver to feel nervous and therefore resulting in inconvenience.

The driver assistance apparatus 800 according to an embodiment of the present invention controls a warning to not be output in the situation as shown in FIG. 14, thereby preventing the inconvenience that the driver may feel when using the conventional device.

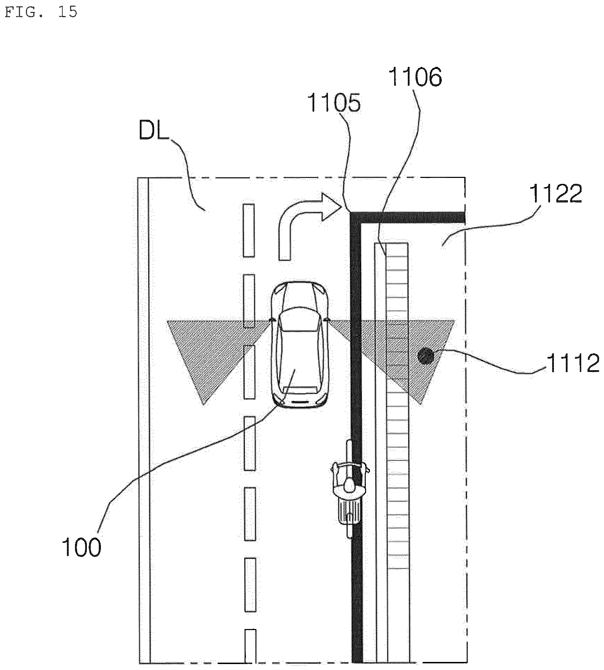

As illustrated in FIG. 15, the current driving lane DL may be located next to a sidewalk 1122. The processor 870 may detect the sidewalk 1122 based on a vehicle around image. The processor 870 may determine whether to output a warning, based on a curb 1106 and a line 1105 which separates the current driving lane DL and the sidewalk 1122 from each other.

The processor 870 may acquire information on detection of an object 1112 located on the sidewalk 1122. Based on the line 1105 or the curb 1106 which separates the current driving lane DL and the sidewalk 1122 from each other, the processor 870 may determine whether the object 1112 is located on the sidewalk 1122 or on a roadway.

The processor 870 may control the output unit 250 to not output a warning when the object 1112 is located on the sidewalk 1122.

Meanwhile, the object 1112 may include a structure, a pedestrian, or a bicycle on the sidewalk 1122.

In the situation as shown in FIG. 15, a conventional blind spot detection device detects an object 1112 and outputs a warning. In such a case, an unnecessary warning is output, causing a driver to feel nervous and therefore resulting in inconvenience.

The driver assistance apparatus 800 according to an embodiment of the present invention controls a warning to not be output in the situation as shown in FIG. 15, thereby preventing the inconvenience that the driver may feel when using the conventional device.

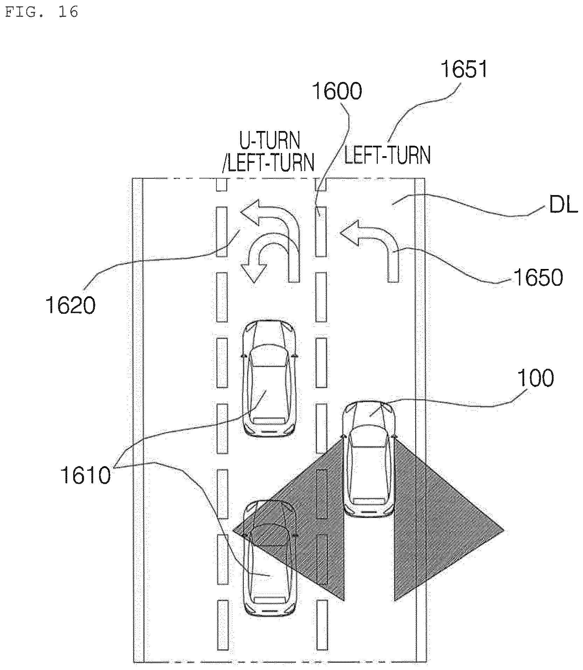

FIG. 16 is a view illustrating operation of a driver assistance apparatus based on navigation information according to an embodiment of the present invention.

Referring to FIG. 16, the processor 870 may receive navigation information from the navigation system 770 via the interface 830.

Based on the navigation information, the processor 870 may determine whether to output a warning via the output unit 250.

The processor 870 may match information on the current driving lane DL with the navigation information. Based on a matching result, the processor 870 may determine whether to output a warning via the output unit 250.

The processor 870 may receive turn signal input information via the interface 830. The turn signal input information may be received from the user interface device 200, the controller 170, or the vehicle drive device 600.

Based on the turn signal input information, the processor 870 may determine whether to output a warning via the output unit 250.

The navigation information may include route information of the vehicle 100. When turn signal input information corresponding to the route information is being received, the processor 870 may acquire information on detection of an object located in a next lane in a direction of a turn signal. In this case, the processor 870 may control the output unit 250 to not output a warning.

As illustrated in FIG. 16, the current driving lane DL may be a left turn lane. The processor 870 may determine a left turn lane based on a vehicle around image. For example, based on a pattern 1650 or text 1651 painted on the road surface, the processor 870 may determine that the current driving lane DL is a left turn lane.

Based on map information and Global Positioning System (GPS) information, the processor 870 may determine that the current driving lane DL is a left turn lane.

The processor 870 may receive turn signal input information intended to make a left turn in the current driving lane DL. In this case, the left turn may match the route information of the vehicle 100.

The current driving lane DL may be separated by a dotted line 1600. The processor 870 may detect the dotted line 1600 based on a vehicle around image.

The processor 870 may acquire information on detection of an object located in a lane 1620 on the left side of the current driving lane DL. The object may be a nearby vehicle that is located in the left side of the current driving lane DL to make a left turn or a U-turn in the lane 1620.

The processor 870 may control the output unit 250 to not output a warning.

Meanwhile, if traffic keeps to the right, the situation may turn out to be the opposite to the example of FIG. 16. In such a case, a vehicle may be a right hand drive (RHD) vehicle.

The current driving lane DL may be a right turn lane. The processor 870 may determine a right turn lane based on a vehicle around image. For example, based on a pattern or text painted on the road surface, the processor 870 may determine that the current driving lane DL is a right turn lane.

Based on map information and GPS information, the processor 870 may determine that the current driving lane DL is a right turn lane.

The processor 870 may receive turn signal input information intended to make a right turn in the current driving lane DL. In this case, the right turn may match the route information of the vehicle 100.

The current driving lane DL may be separated by a dotted line. The processor 870 may detect the dotted line based on a vehicle around image.

The processor 870 may acquire information on detection of an object located in a lane on the right side of the current driving lane DL. The object may be a nearby vehicle that is located in the lane of the right side of the current driving lane DL to make a right turn or a U-turn in the lane.

The processor 870 may control the output unit 250 to not output a warning.

In the situation as shown in FIG. 16, if there are two left turn lanes at an intersection, the first lane most close to the center line and the second lane next to the first lane are the left turn lanes. If a left turn signal is input when a vehicle is located in the second lane, a conventional blind spot detection device detects a vehicle located on the first lane and outputs a warning. In this case, an unnecessary warning is output, causing a driver to feel nervous and therefore resulting in inconvenience.

The driver assistance apparatus 800 according to an embodiment of the present invention controls a warning to not be output in the situation like FIG. 16, thereby preventing the inconvenience that the driver may feel when using the conventional device.

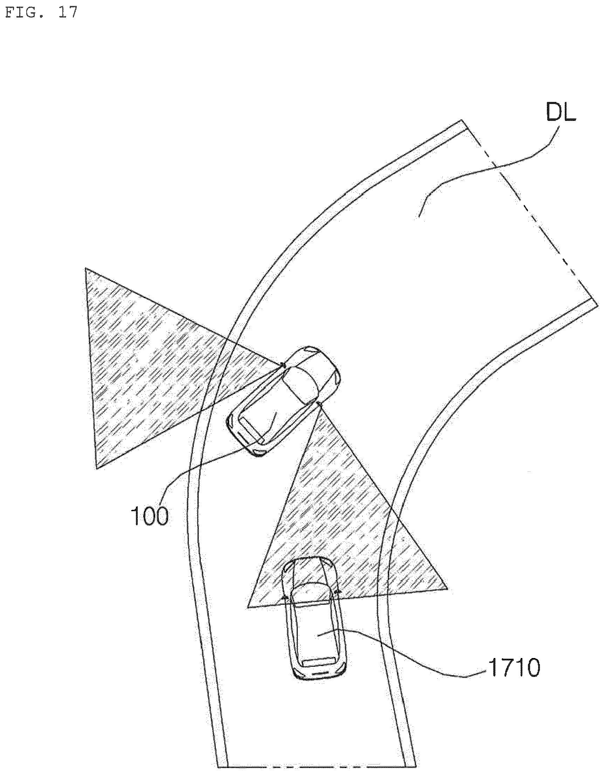

FIG. 17 is a view illustrating operation of a driver assistance apparatus based on information on a curve in a current driving lane, according to an embodiment of the present invention.

Referring to FIG. 17, the processor 870 may acquire information on a curve in the current driving lane DL. The processor 870 may acquire information on a curve in the current driving lane DL based on a vehicle around image. The processor 870 may acquire information on a curve in the current driving lane DL based on navigation information.

The information on a curve may include information about the presence of a curve, and curvature information of the curve.

Based on the curve information, the processor 870 may determine whether to output a warning via the output unit 250.

The processor 870 may acquire information indicating a state in which the vehicle 100 is travelling around a curve. Based on a vehicle around image or navigation information, the processor 870 may determine that the vehicle 100 is travelling around a curve.

When the vehicle 100 is travelling around a curve, the processor 870 may determine, based on a vehicle around image, whether a detected nearby vehicle 1710 is travelling in the current driving lane DL.

If the nearby vehicle 1710 is determined to be travelling in the current driving lane, the processor 870 may control the output unit 250 to not output a warning.

In the situation as shown in FIG. 17, a conventional blind spot detection device detects the nearby vehicle 110 and outputs a warning. In such a case, an unnecessary warning is output, causing a driver to feel nervous and therefore resulting in inconvenience.

The driver assistance apparatus 800 according to an embodiment of the present invention controls a warning to not be output in the situation as shown in FIG. 17, thereby preventing the inconvenience that the driver may feel when using the conventional device.

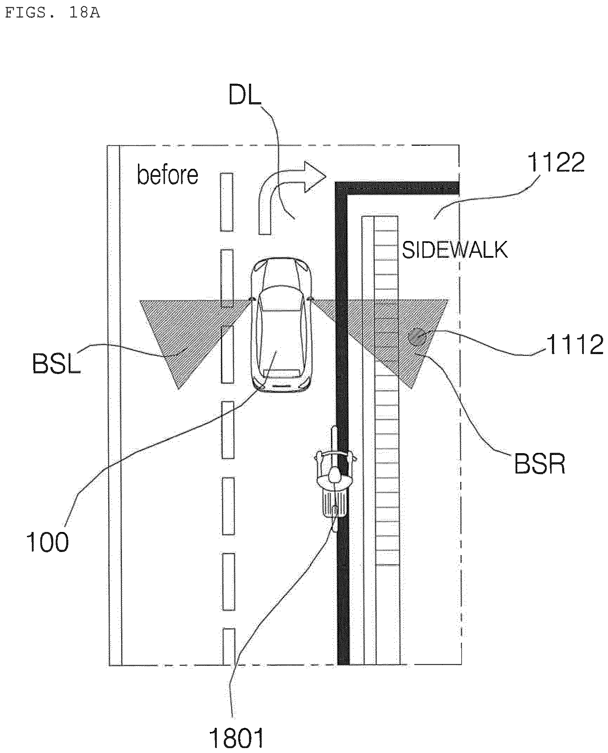

FIGS. 18A to 23B are views illustrating operation of a driver assistance apparatus which changes a position of a preset blind spot area, according to an embodiment of the present invention.

The processor 870 may acquire driving situation information of the vehicle 100.

The processor 870 may acquire driving situation information generated by the object detection device 300.

The processor 870 may receive driving situation information via the interface 830 from the communication device 400, the maneuvering device 500, the vehicle drive device 600, the operation system 700, the navigation system 770, and the sensing unit 120.

The driving situation information of the vehicle 100 may include at least one of the following: information about a pulling-out situation of the vehicle 100, information about a left-turn situation of the vehicle 100, information about a right-turn situation of the vehicle 100, information about a U-turn situation of the vehicle 100, and information about a curve-travelling situation of the vehicle 100.

The driving situation information of the vehicle 100 may include information on a type of a line that separates the current driving lane in which the vehicle 100 is travelling.

The driving situation information of the vehicle 100 may include information on an object located in the vicinity of the vehicle 100.

The driving situation information of the vehicle 100 may include weather information and time information, each of which corresponds to the current travel time of the vehicle 100.

The driving situation information of the vehicle 100 may include speed information, acceleration information, deceleration information, steering information, and direction information of the vehicle 100.

The processor 870 may control change of a preset blind spot area based on the driving situation information.

The processor 870 may change the range of a left blind spot area BSL and the range of a right blind spot area BSR differently.

The processor 870 may change the size of a blind spot area. The processor 870 may change the size of an object detection area.

The processor 870 may change a position of a blind spot area. The position of a blind spot may indicate a position relative to the vehicle 100.

As illustrated in FIGS. 18A to 18B, the vehicle 100 may be travelling in a lane next to a sidewalk 1122.

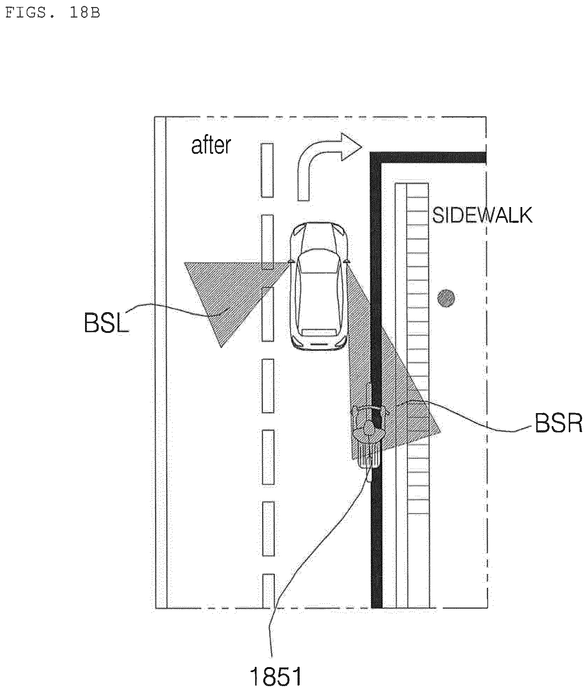

Referring to FIGS. 18A and 18B, when the vehicle 100 is located in the current driving lane DL next to a sidewalk 1122, the processor 870 may change the right blind spot area BSR which is positioned toward the sidewalk 1122.

The processor 870 may change the range of the left blind spot area BSL and the range of the right blind spot area BSR differently.

The processor 870 may change the size of the right blind spot area BSR to be smaller than the size of the left blind spot area BSL.

The processor 870 may control the right blind spot area BSR to be positioned out of the sidewalk 1122.

The processor 870 may control the right blind spot area BSR to extend toward the rear side of the vehicle 100.

When the vehicle 100 is travelling in the current driving lane DL next to the sidewalk 1122, the driver assistance apparatus 800 does need to detect an object located on the sidewalk 1122. In this case, the driver assistance apparatus 800 needs to detect a motorcycle 1851 attempting to travel between the vehicle 100 and the sidewalk 1122.

By changing the blind spot areas, it is possible to detect only an object expected to collide with the vehicle 100, and to output a warning accordingly. In this manner, unnecessary warning is restrained and accidents are prevented.

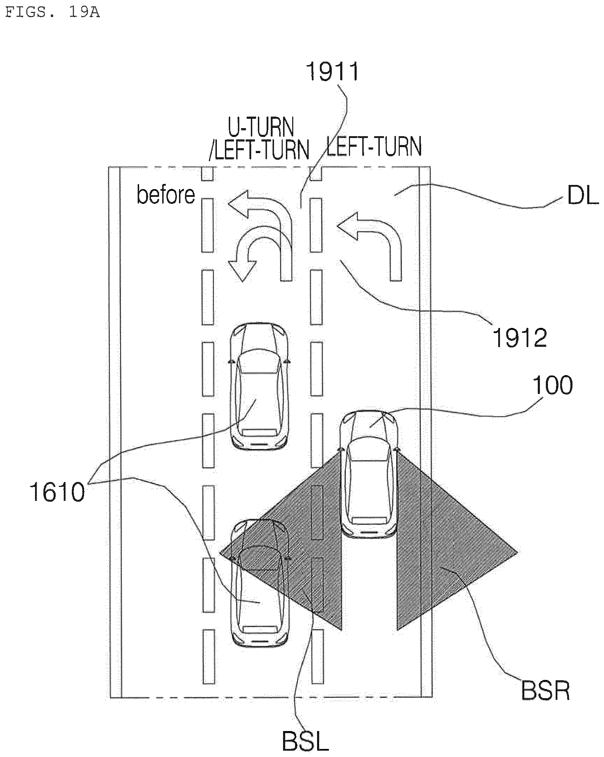

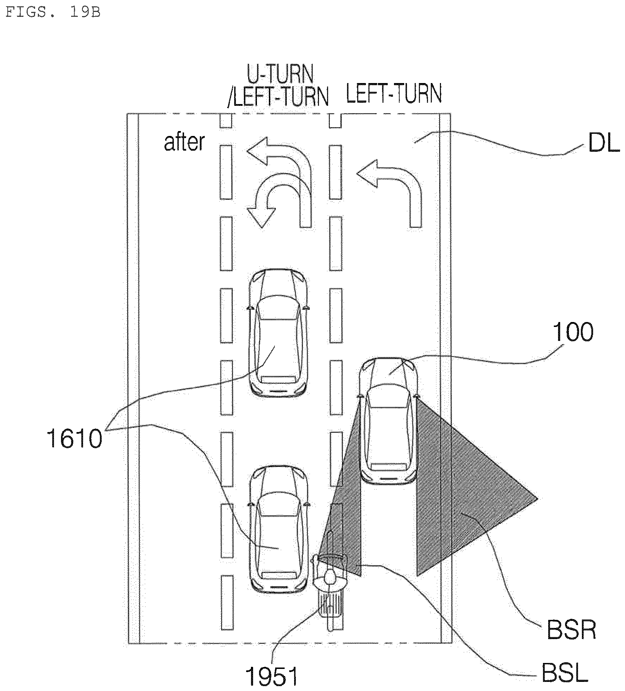

As illustrated in FIGS. 19A and 19B, the vehicle 100 may be travelling on a left turn lane.

Referring to FIGS. 19A to 19B, when the vehicle 100 is located in a second left turn lane 1912, the processor 870 may change a left blind spot area BSL which is positioned toward the first left turn lane 1911.

The fist left turn lane 1911 may be a first lane most close to the center line that divides the roadway. The second left lane 1912 may be a lane next to the first lane.

The processor 870 may change the range of a left blind spot area BSL and the range of a right blind spot area BSR differently.

The processor 870 may change the size of the left blind spot area BSL to be smaller than the size of the right blind spot area BSR.

The processor 870 may control the left blind spot area BSL to be positioned out of the first left turn lane 1911.

The processor 870 may control the left blind spot area BSL to extend toward the rear side of the vehicle 100.

When the vehicle 100 is travelling in the second left turn lane 1912, the driver assistance apparatus 800 does not need to detect an object 1610 located in the first left turn lane 1911. In this case, the driver assistance apparatus 800 needs to detect a motorcycle 1951 travelling between the first left turn lane 1911 and the second turn lane 1912.

By changing blind spot areas, it is possible to detect only an object expected to collide with the vehicle 100, and to output a warning accordingly. In this manner, unnecessary warning is restrained and accidents are prevented.

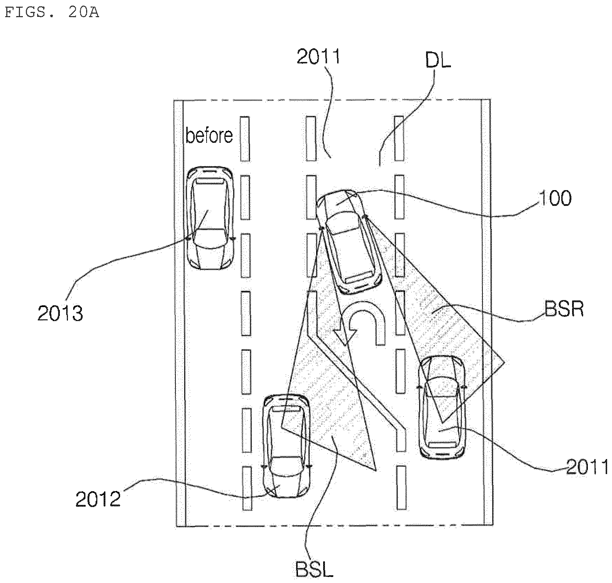

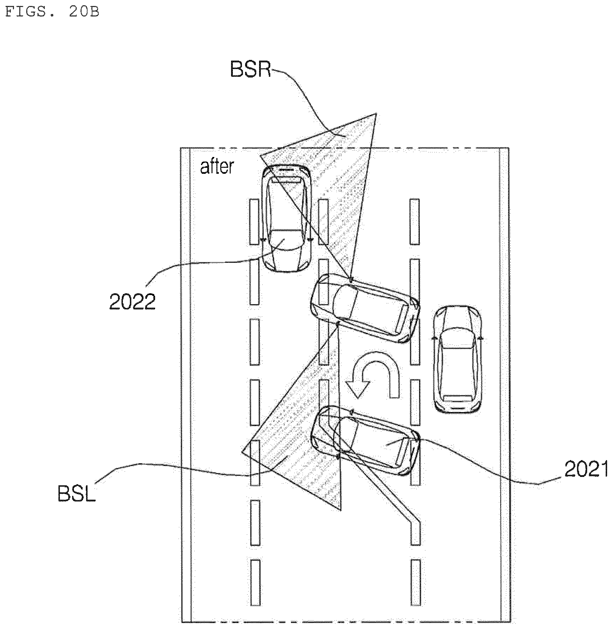

As illustrated in FIGS. 20A and 20B, the vehicle 100 may be travelling in a U-turn lane.

Referring to FIGS. 20A and 20B, when the vehicle 100 is located in a U-turn lane 2011, the processor 870 may change a left blind spot area BSL which is positioned in a direction of a U-turn. The processor 870 may change a right blind spot area BSR which is positioned in a direction opposite to the direction of the U-turn.

To detect a following vehicle 2021 which is making a U-turn in the current driving lane DL, the processor 870 may change the position of the left blind spot area BSL toward the current driving lane DL and a lane on the left side of the current driving lane DL. In this case, the processor 870 may change only the position of the left blind spot area BSL without changing the size thereof. Meanwhile, the lane on the left side of the current driving lane DL may be an opposite-direction lane sharing the center line with the current driving lane DL.

To detect a nearby vehicle 2022 which is travelling in the opposite direction, the processor 870 may change the position of the right blind spot area BSR toward the lane on the left side of the current driving lane. In this case, the processor 870 may change only the position of the right blind spot area BSR without changing the size thereof. Meanwhile, the lane on the left side of the current driving lane DL may be an opposite-direction lane sharing the center line with the current driving lane DL.

As such, by changing the blind spot areas, it is possible to detect an object in an appropriate manner suitable for the vehicle 100 making a U-turn, and to output a warning, thereby preventing unnecessary warning and accidents.

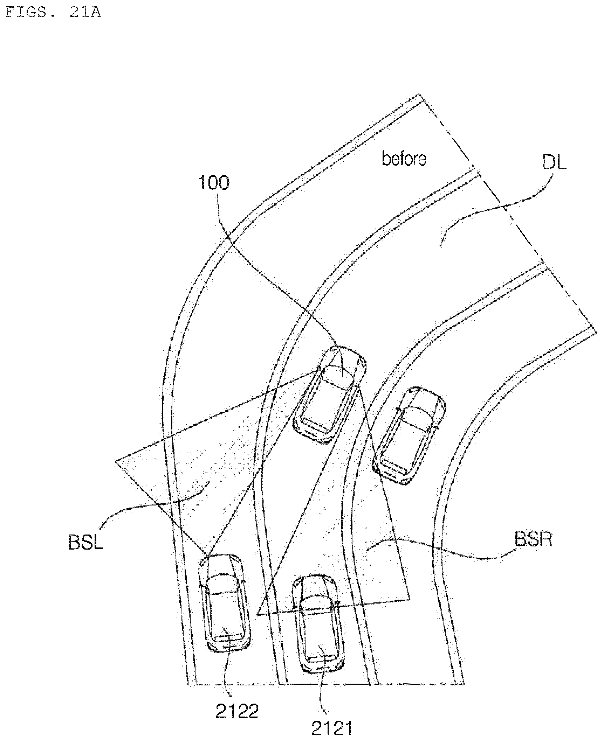

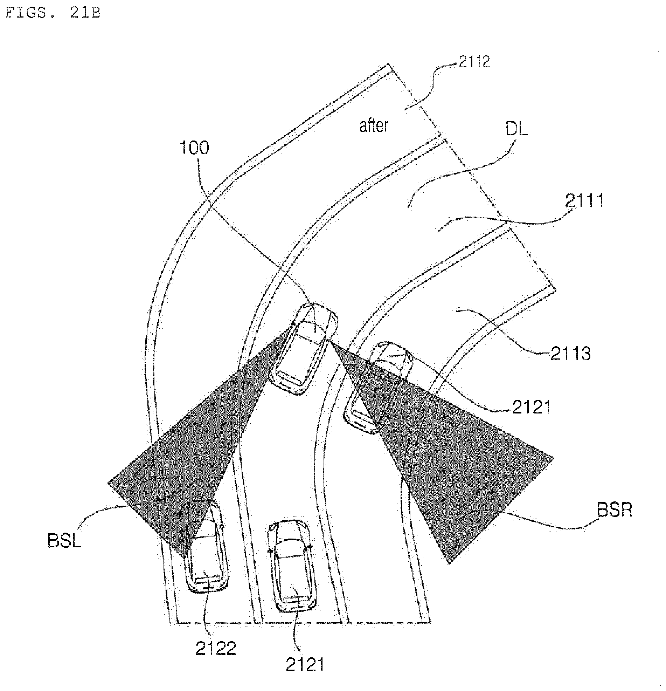

As illustrated in FIGS. 21A and 21B, the vehicle 100 may be travelling around a curve.

Referring to FIGS. 21A and 21B, when the vehicle 100 is located on a curve 2111, the processor 870 may control change of blind spot areas BSL and BSR based on curvature information of the curve.

When the vehicle 100 is located on a curve that bends toward the right side of the direction of travel of the vehicle 100, the processor 870 may change the positions of the left blind spot areas BSL and the right blind spot areas BSR. The positions of the left blind spot areas BSL and the right blind spot areas BSR indicate positions relative to the vehicle 100.

For example, the processor 870 may change the position of the left blind spot area BSL toward a lane on the left side of the current driving lane DL. In this case, the processor 870 may increase the degree of change of the left blind spot area BSL based on a curvature of the curve.

As the curvature of the curve becomes greater, the left blind spot area BSL may be positioned more closely to the vehicle 100. For example, the processor 870 may change the position of the left blind spot area BSL in a manner that gradually decreases the angle between the left belt line of the vehicle 100 and the left blind spot area BSL as the curvature of the curve gradually increases.

For example, the processor 870 may change the position of the right blind spot area BSR toward a lane 2113 on the right side of the current driving lane DL. In this case, the processor 870 may increase the degree of the right blind spot area BSR based on a curvature of the curve.

As the curvature of the curve becomes greater, the right blind spot area BSR may be positioned farther from the vehicle 100. For example, the processor 870 may change the position of the right blind spot area BSR in a manner that gradually increases the angle between the right belt line of the vehicle 100 and the right blind spot area BSR as the curvature of the curve gradually increases.

When the vehicle 100 is on a curve which bends toward the left side of the direction of travel of the vehicle 100, the processor 870 may change the positions of the left blind spot areas BSL and the right blind spot areas BSR. The positions of the left blind spot area BSL and the right blind spot area BSR indicate positions relative to the vehicle 100.

For example, the processor 870 may change the position of the right blind spot area BSR a lane on the right side of the current driving lane DL. In this case, the processor 870 may increase the degree of change of the right blind spot area BSR based on a curvature of the curve.

As the curvature the curve becomes greater, the right blind spot area BSR may be positioned more closely to the vehicle 100. For example, the processor 870 may change the position of the right blind spot area BSR in a manner that gradually decreases the angle between the right belt line of the vehicle 100 and the right blind spot area BSR as the curvature of the curve gradually increases.

For example, the processor 870 may change the position of the left blind spot area BSL toward a lane on the left side of the current driving lane DL. In this case, the processor 870 may increase the degree of change of the left blind spot area BSL based on a curvature of the curve.

As the curvature the curve becomes greater, the left blind spot area BSL may be positioned farther from the vehicle 100. For example, the processor 870 may change the position of the left blind spot area BSL in a manner that gradually increases the angle between the left belt line of the vehicle 100 and the left blind spot area BSL as the curvature of the curve gradually increases.

As such, by changing the blind spot areas, it is possible to detect an object in an appropriate manner suitable for the vehicle 100 travelling around a curve, and to output a warning, thereby preventing unnecessary warning and an accident.

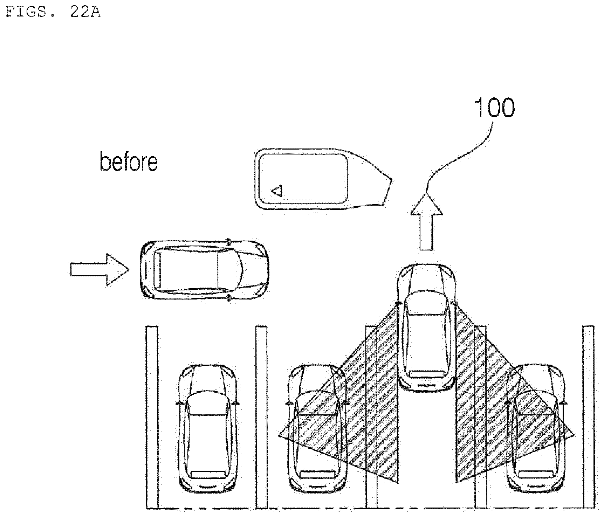

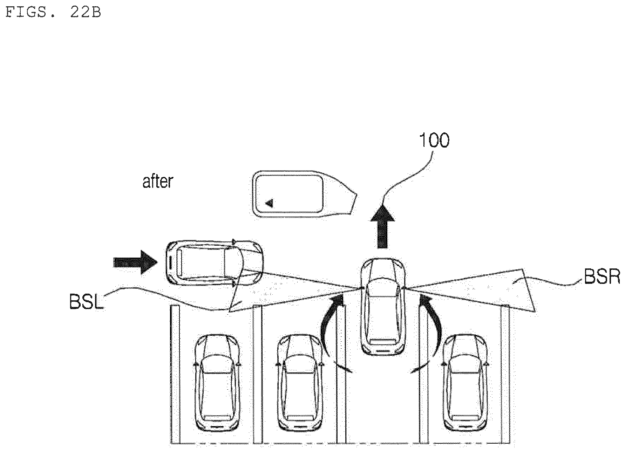

As illustrated in FIGS. 22A and 22B, the vehicle 100 may be pulling out of a parking space.

Referring to FIGS. 22A and 22B, the processor 870 may acquire information about a pulling-out situation. In this case, the processor 870 may change the position of a preset blind spot area toward a direction of travel of the vehicle 100.

When the vehicle 100 parked backward is pulling forward out of a parking space, the driver assistance apparatus 800 needs to sense the lateral sides of the vehicle 100, rather than the rear side thereof.

To sense the left side of the vehicle 100, the processor 870 may change the position of the left blind spot area BSL. The processor 870 may control the left blind spot area BSL to be rotated toward the front side of the vehicle 100. In this case, the processor 870 may control the speed of changing the left blind spot area BSL based on a moving speed of the vehicle 100. The processor 870 may control the speed of changing the left blind spot area BSL in proportion to the moving speed of the vehicle 100.

To sense the right side of the vehicle 100, the processor 870 may change the position of the right blind spot area BSR. The processor 870 may control the right blind spot area BSR to be rotated toward the front side of the vehicle 100. In this case, the processor 870 may control the speed of changing the right blind spot area BSR based on a moving speed of the vehicle 100. The processor 870 may control the speed of changing the right blind spot area BSR in proportion to the moving speed of the vehicle 100.

When the vehicle 100 parked forward is pulling backward out of a parking space, the driver assistance apparatus 800 needs to sense the rear side, the left side, and the right side of the vehicle 100. In this case, the processor 870 may control the blind spot areas to be enlarged.

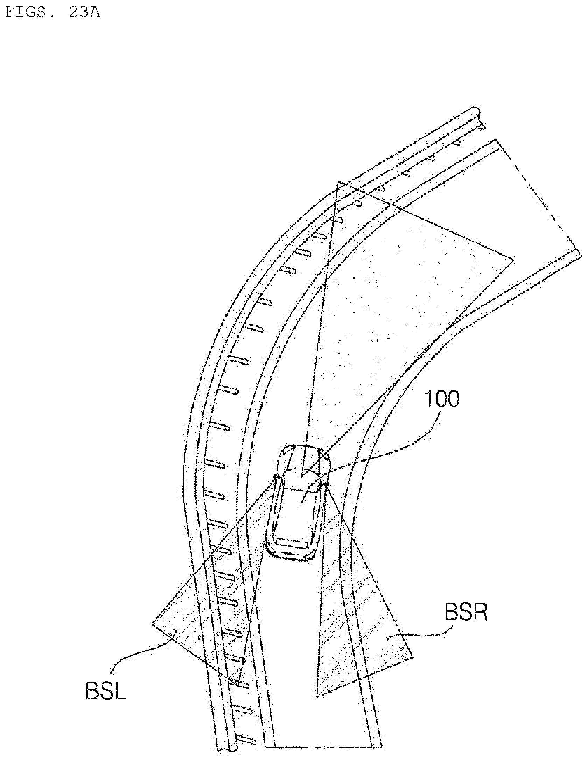

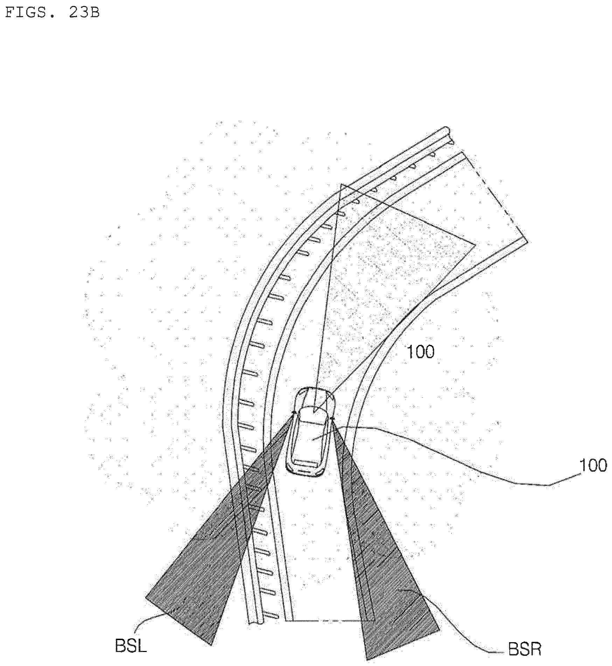

As illustrated in FIGS. 23A and 23B, the vehicle 100 may be travelling on a road with short sight distance.

Referring to FIGS. 23A and 23B, the processor 870 may change the blind spot areas BSL and BSR based on the visibility range of the camera 310.

The processor 870 may estimate sight distance based on an image acquired by the camera 310.

The processor 870 may control the size of the blind spot areas BSL and BSR in disproportion to the sight distance.

In response to short sight distance, the processor 870 may control the blind spot areas BSL and BSR to be enlarged.

In response to long sight distance, the processor 870 may control the blind spot areas BSL and BSR to be reduced.

When sight distance is short, accident is more likely to occur. Thus, the possibility of accident may be reduced by enlarging the blind spot areas.

When the sight distance is long, the blind spot areas may be reduced to prevent unnecessary warning.

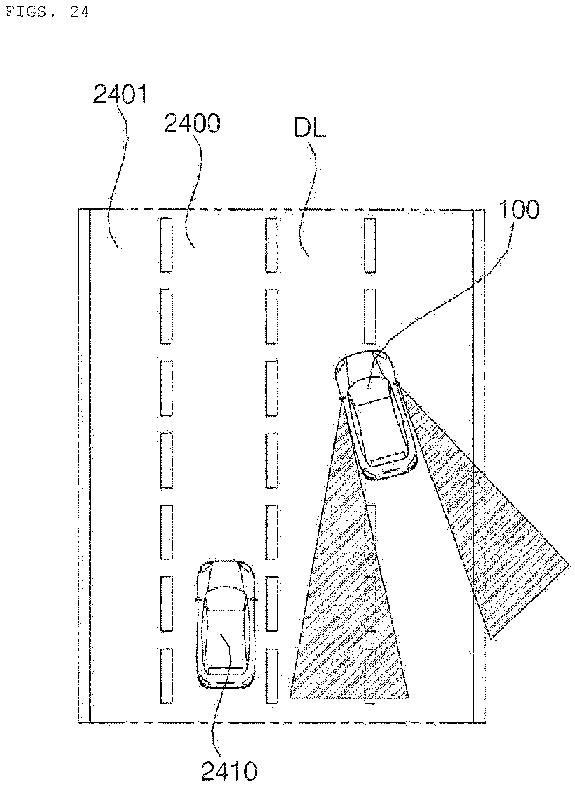

FIG. 24 is a view illustrating operation of a driver assistance apparatus when a detected nearby vehicle is travelling on a lane which is neither the current driving lane nor a lane next to the current driving lane, according to an embodiment of the present invention.

Referring to FIG. 24, the processor 870 may determine, based on a vehicle around image, whether a detected nearby vehicle 2410 is located in a lane 2401 which is neither the current driving lane DL nor a lane 2400 next to the current driving lane DL.

If the nearby vehicle 2410 is located in the lane 2401 which is neither the current driving lane DL nor the lane 2400 next to the current driving lane DL, the processor 870 may control the output unit 250 to not output a warning.

When the vehicle 100 attempts to move to the lane 2400 next to the current driving lane DL, the nearby vehicle 2410 in the lane 2401 next to the lane 2400 may be detected. In this case, a conventional blind spot detection device outputs a warning even though collision between the vehicle 100 and the nearby vehicle 2410 is not expected when the vehicle 100 moves to the lane 2400. In such a case, unnecessary warning is output, causing a driver to feel nervous and therefore resulting in inconvenience.

The driver assistance apparatus 800 according to an embodiment of the present invention controls a warning to not be output in a situation like FIG. 24, thereby preventing inconvenience that the driver may feel when using the conventional device.

The present invention as described above may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). In addition, the computer may include a processor or a controller. Thus, the above detailed description should not be construed as being limited to the embodiments set forth herein in all terms, but should be considered by way of example. The scope of the present invention should be determined by the reasonable interpretation of the accompanying claims and all changes in the equivalent range of the present invention are intended to be included in the scope of the present invention.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternatives uses will also be apparent to those skilled in the art.

## Claims

1. A driver assistance apparatus (800) comprising:
a camera (310) configured to acquire a vehicle around image;
an output unit (250); and
a processor (870) configured to:
detect a current driving lane based on the vehicle around image and determine a type of a line that separates the current driving lane,
acquire information on an object located in a lane next to the current driving lane, and
based on the type of the line and the information on the object, determine whether to output a warning via the output unit.

2. The driver assistance apparatus (800) according to claim 1,
wherein the object is a nearby vehicle, and
wherein the processor (870) is configured to acquire route information of the nearby vehicle, and is configured to determine, further based on the route information, whether to output a warning via the output unit.

3. The driver assistance apparatus (800) according to claim 1 or 2, wherein the processor (870) is configured to determine whether the line is permitted to be crossed, and is configured to determine, based on a result of the determination, whether to output a warning via the output unit.

4. The driver assistance apparatus (800) according to claim of claim 3, wherein when it is not determined that the line is permitted to be crossed, the processor (870) is configured to control the output unit to not output a warning in response to detection of an object in a lane next to the line that is not permitted to be crossed.

5. The driver assistance apparatus (800) according to claim 4,
wherein the current driving lane is separated by a center line, and
wherein the processor (870) is configured to control the output unit to not output a warning in response to detection of a nearby vehicle travelling in a lane on the opposite side of the center line from the current driving lane;
and/or
wherein the processor (870) is configured to detect a guardrail based on the vehicle around image, and
wherein the processor (870) is configured to control the output unit to not output a warning in response to detection of a nearby vehicle travelling in a lane on the opposite side of the guardrail from the current driving lane;
and/or
wherein the current driving lane is separated by a solid lane, and
wherein the processor (870) is configured to control the output unit to not output a warning in response to detection of a nearby vehicle travelling in a lane next to the current driving lane with the solid line there between;
and/or
wherein the current driving lane is next to a sidewalk, and
wherein the processor (870) is configured to control the output unit to not output a warning in response to detection of an object located on the sidewalk.

6. The driver assistance apparatus (800) according to any one of claims 1 to 5, further comprising an interface configured to receive navigation information,
wherein the processor (870) is configured to determine, further based on the navigation information, whether to output a warning via the output unit.

7. The driver assistance apparatus (800) according to claim 6, wherein the processor (870) is configured to match information on the current driving lane with the navigation information, and is configured to determine, based on a matching result, whether to output a warning via the output unit.

8. The driver assistance apparatus (800) according to claim 6 or 7,
wherein the navigation information includes route information of a vehicle, and
wherein when turn signal input information corresponding to the route information is being received, the processor (870) is configured to control the output unit to not output a warning in response to detection of an object in a next lane in a direction of a turn signal.

9. The driver assistance apparatus (800) according to claim 8,
wherein the current driving lane is a left turn lane, and
wherein when turn signal input information intended to make a left turn in the current driving lane is being received, the processor (870) is configured to control the output unit to not output a warning in response to detection of an object in a lane on the left side of the current driving lane;
and/or
wherein the current driving lane is a right turn lane, and
wherein when turn signal input information intended to make a right turn in the current driving lane is being received, the processor (870) is configured to control the output unit to not output a warning in response to detection of an object in a lane on the right side of the current driving lane.

10. The driver assistance apparatus (800) according to any one of claims 1 to 9,
wherein the processor (870) is configured to acquire information on a curve in the current driving lane based on the vehicle around image, and is configured to determine, further based on the information on the curve, whether to output a warning via the output unit.

11. The driver assistance apparatus (800) according to claim 10,
wherein when a vehicle is travelling around the curve, the processor (870) is configured to determine, based on the vehicle around image, whether a detected nearby vehicle is travelling in the current driving lane, and
wherein when it is determined that the nearby vehicle is travelling in the current driving lane, the processor is configured to control the output unit to not output a warning.

12. The driver assistance apparatus (800) according to claim 11, wherein the processor (870) is configured to acquire curvature information of the curve, and is configured to control change of a preset blind spot area based on the curvature information.

13. The driver assistance apparatus (800) according to any one of claims 1 to 12,
wherein the processor (870) is configured to acquire driving situation information of a vehicle, and is configured to control change of a preset blind spot area based on the driving situation information.

14. The driver assistance apparatus (800) according to claim 13, wherein the processor (870) is configured to acquire pulling-out situation information, and is configured to change a position of the preset blind spot area toward a direction of travel of the vehicle;
and/or
wherein the processor (870) is configured to acquire left-turn situation information, right-turn situation information, or U-turn situation information, and is configured to change a position of the preset blind spot area to toward a direction of travel of the vehicle.

15. The driver assistance apparatus (800) according to any one of claims 1 to 14,
wherein the processor (870) is configured to determine, based on the vehicle around image, whether a detected nearby vehicle is travelling in a lane which is neither the current driving lane nor a lane next to the current driving lane, and
wherein when it is determined that the detected nearby vehicle is travelling in a lane which is neither the current driving lane nor a lane next to the current driving lane, the processor (870) is configured to control the output unit to not output a warning.
